# EUROPEAN PATENT SPECIFICATION

(11) **EP 4 324 681 B1**
(45) Date of publication and mention of the grant of the patent: **01.07.2026**
(21) Application number: 22190541.7
(22) Date of filing: 16.08.2022
(51) Int. Cl.: B60L 7/18, B60L 15/20, B60L 58/15, B60L 7/24, B60L 7/22

(54) **A METHOD FOR ENERGY MANAGEMENT AND AN ELECTRIC DRIVELINE SYSTEM**
VERFAHREN ZUR ENERGIEVERWALTUNG UND ELEKTRISCHES ANTRIEBSSYSTEM
PROCÉDÉ DE GESTION D'ÉNERGIE ET SYSTÈME D'ENTRAÎNEMENT ÉLECTRIQUE

(43) Date of publication of application: 21.02.2024
(73) Proprietor: VOLVO TRUCK CORPORATION, 405 08 Göteborg (SE)
(72) Inventor: LEVIN, Robin, 405 08 GÖTEBORG (SE); DYVERFORS, Niklas, 413 08 GÖTEBORG (SE)
(74) Representative: Kransell & Wennborg KB

(56) References cited:
- EP-A1- 3 266 645
- WO-A1-2015/089650
- WO-A1-2020/143495
- US-A1- 2017 120 892
- US-A1- 2018 086 227
- US-A1- 2021 086 652
- US-B2- 8 862 356

## Description

### TECHNICAL FIELD

The present disclosure relates to a method for energy management of an electric energy storage of an electric vehicle. The present disclosure also relates to a driveline system, a control unit, and a computer program. Although the method and system will be described in relation to a vehicle in the form of a truck, the method and system can also be efficiently incorporated in other vehicle types such as busses, light-weight trucks, passenger cars, construction equipment, marine vessels, and industrial equipment, as long as they are at least partly electrically propelled.

### BACKGROUND

Batteries are becoming a more common source of energy for providing propulsion power to vehicles. Such batteries are rechargeable batteries and consist of several battery cells that may be connected in series and/or in parallel forming a complete battery pack for the vehicle.

In conventional drivelines a retarder can be used as an auxiliary brake to generate braking torque by converting the kinetic energy of the vehicle to heat. For electric vehicles powered by a propulsion battery, it is also possible to use an electric machine to generate braking torque. However, this requires that there is enough capacity in the battery to store the energy generated from the electric machine during the whole breaking cycle. To alleviate this, a brake resistor is often introduced as an added component, that converts the electric energy into heat that is dissipated through surrounding air or a cooling system.

However, both retarders and break resistors are space and cost demanding. A further option is to at all times ensure to have enough capacity in the batteries for receiving regenerative charging during the breaking cycle. Unfortunately, this leads to that the battery state of charge window is heavily reduced in case of long potential downhill driving. Example prior art include WO2020/143495A1 which discloses a regenerative brake and retarding system for hybrid and commercial vehicle, US2021/0086652A1 which discloses systems and methods of battery management and control for a vehicle, US2017/0120892A1 which discloses a vehicle control apparatus, and WO2015/089650A1 which discloses an electric vehicle power management driver control system.

Accordingly, there is a need for better energy management for propulsion batteries for handling regenerative energy at downhill driving.

### SUMMARY

An object of the invention is to provide an improved method for energy management of an electric energy storage of an electric vehicle and a corresponding electric driveline system. The invention is defined in the appended claims.

According to a first aspect of the invention, the object is achieved by a method according to claim 1. Hereafter "embodiment(s)" relate to embodiments of the disclosure.

According to the first aspect of the invention, there is provided a method for energy management of an electric energy storage of an electric vehicle comprising at least one electric machine, the method comprising: determining a potential regenerative charging amount for the electric energy storage during an upcoming braking cycle for the electric vehicle; before reaching the braking cycle, generating driving torque using at least one electric machine while at the same time generating a braking torque using a brake generating device to discharge the electric energy storage sufficient to receive the potential regenerative charging amount at the upcoming braking cycle, wherein the generated driving torque corresponds to the sum of a demanded driving torque and the generated braking torque.

By the provision of generating driving torque while at the same time generating braking torque in such a way that generated driving torque corresponds to the sum of a demanded driving torque and the generated braking torque, the vehicle can drive as expected by the driver and at the same time create the needed state of charge window in the electric energy storage for the coming braking cycle. Once at the braking cycle, enough capacity for receiving charge is available in the electric energy storage to cope with the energy generated during the breaking cycle.

In other words, by means of embodiments described herein, since the potential regenerative charging amount is determined prior to reaching the braking cycle, the appropriate energy in the electric energy storage can be discharged when it is needed prior to reaching the braking cycle. This provides for better planning of the discharge event compared to always ensure to have sufficient available state of charge headroom in the electric energy storage.

The electric energy storage may be a propulsion battery and should be interpreted as providing propulsion energy to the vehicle. Thus, the vehicle may be an electric, hybrid, or plug-in hybrid vehicle comprising an electric engine, wherein the propulsion battery provides power to the electric engine for providing propulsion for the electric, hybrid, or plug-in hybrid vehicle. The battery may be Li-ion battery comprising multiple cells arranged in series and in parallel as is known in the art.

The potential regenerative charging amount may for example be in terms of state of charge amount expected to be available at the braking cycle, or the expected energy absorbed during the braking cycle.

The demanded driving torque corresponds to the torque needed to fulfil a driver request. Stated in another way, the demanded driving torque corresponds to what the driver expects when requesting a propulsion torque for driving the vehicle forward. For example, when the driver applies a force on the drive pedal, a certain amount of driving torque is expected by the driver. The sum of this demanded driving torque and the generated braking torque should substantially correspond to the generated driving torque. In other words, the electric machine that generates driving torque will be controlled to provide a driving torque that is larger than the driving torque demanded by the driver.

According to the invention, the electric vehicle comprises at least two electric machines, wherein the brake generating device is at least one of the electric machines that is not generating driving torque. Hereby, at least one electric machine is configured or utilized to generate driving torque, and at least one of the remaining electric machines is configured or utilized to generate the braking torque. By utilizing one of the electric machines to generate a braking torque that at least partly counteracts the generated driving torque, an increased energy loss is generated that is converted to heat and absorbed by the cooling system of the vehicle. In this way, a space demanding and costly brake resistor for dissipating energy from the electric energy storage, or a large retarder can be avoided. The electric machines are part of a driveline of the electric vehicle to provide propulsion for the vehicle.

Accordingly, generating driving torque using at least one electric machine while at the same time generating a braking torque using at least one other electric machine is performed to reduce the energy efficiency of the electric drivetrain and therefore increase the total amount of electric power used to propel the vehicle.

In one embodiment, the electric vehicle may comprise a secondary braking system, wherein generating the braking torque comprises generating at least part of the braking torque using the secondary braking system. The secondary braking system may assist an electric machine for generating braking torque and may be a smaller size retarder compared to conventional retarders used in combustion engine propelled vehicles. For example, a conventional retarder may provide a brake power of 300-500 kW which is absorbed by a cooling system of the vehicle. With the proposed embodiment, a portion of this brake power is used for charging the electric energy storage system. This means that the retarder can advantageously be dimensioned with a reduced maximum brake power capability compared to that of traditional systems.

According to an example embodiment, the method may comprise acquiring planned route data indicative of a drive cycle of the electric vehicle including the braking cycle, wherein the step of determining a potential regenerative charging amount comprises determining the potential regenerative charging amount using the planned route data. Hereby, the upcoming need for energy storage capacity corresponding to the potential regenerative charging amount can be accurately determined both in time and in amount of needed energy storage capacity.

Acquiring the planned route data may include using a predictive route function where the planned route is determined from historical location and driving data indicating prior routes. Further, acquiring the planned route data may in other possible implementations include acquiring location data of the planned route for the vehicle, such as from a requested GPS based route or from a planned commercial drive route such as a bus route or commercial truck route associated with an assignment.

According to an example embodiment, generating the driving torque before reaching the braking cycle may comprise initiating the generation of driving torque at a time and with a magnitude so that the discharging of the electric energy storage is completed immediately before reaching the braking cycle. Thus, with information about the location of the braking cycle and the potential regenerative charging amount, the time and magnitude of the generation of driving torque and corresponding braking torque can be initiated timely to be completed at the braking cycle or just before reaching the brake cycle. This ensures that the electric energy storage is not discharged too early and that the electric energy storage maintains a satisfactory state of charge level as often as possible.

According to an example embodiment, the potential regenerative charging amount may be determined from historical potential regenerative charging amounts at the upcoming braking cycle. Thus, potential regenerative charging amounts from prior drive cycles at the specific braking cycle for the vehicle may be evaluated for determining the present the potential regenerative charging amount for the present upcoming braking cycle. For example, information concerning recent potential regenerative charging amounts at the upcoming brake cycle may be used as input, and adjusted according to the present weight of the vehicle to determine the potential regenerative charging amount for the upcoming braking cycle .Further, data such as outside temperature, battery temperature, battery aging, to mention a few examples may be taken into the evaluation to account for the battery condition when determining the potential regenerative charging amount.

According to an example embodiment, the potential regenerative charging amount is determined from a topography of the planned route from which an upcoming braking cycle can be predicted. The topography may be acquired from GPS or other map data provides data indicating the altitude the vehicle will drop at the braking cycle. The potential energy can be calculated from the loss in altitude together with the vehicle weight and speed.

Further, the step of determining a potential regenerative charging amount may comprise predicting the upcoming braking cycle based on a present location of the electric vehicle and historical driving routes of the electric vehicle itself and/or historical driving routes for a plurality of secondary vehicles. For example, a cloud-based system may collect and memorize routes travelled by a fleet of vehicles. The cloud-based system may collect data such as type of road, speed, road inclination, altitudes, etc. so that the vehicle can use this information for predicting an upcoming braking cycle and characteristics thereof, such as topography for determining the potential regenerative charging amount, or even the potential regenerative charging amount itself.

According to a second aspect of the invention, the object is achieved by electric driveline system according to claim 7.

According to the second aspect of the invention, there is provided an electric driveline system for an electric vehicle comprising an electric energy storage, the driveline system comprising: at least one electric machine configured to provide driving torque and a brake generating device configured to provide braking torque to a driveline of the electric machine, and a control unit configured to: acquire data indicating a potential regenerative charging amount for the electric energy storage during an upcoming braking cycle for the electric vehicle; before reaching the braking cycle, control at least one electric machine to generate driving torque and the brake generating device to simultaneously as the driving torque is generated, generate braking torque, to discharge the electric energy storage sufficient to receive the potential regenerative charging amount at the upcoming braking cycle, wherein the generated driving torque corresponds to the sum of a demanded driving torque and the generated braking torque.

The at least one electric machine are part of a driveline, or interchangeably named drivetrain, of the electric vehicle to provide propulsion for the vehicle.

According to the invention, the brake generating device is a further electric machine configured to provide the braking torque. Thus, the electric machines are further utilized for generating increased losses in power to thereby discharge the electric energy storage system. The counteracting of the electric machines increases the losses in the electric energy storage system that may be converted to heat and absorbed by a cooling system of the vehicle. Thereby, the energy efficiency of the electric drivetrain is temporally reduced and therefore increases the total amount of electric power used to propel the vehicle so that energy can be discharge from the electric energy storage.

According to an example embodiment, the brake generating device may comprise a retarder configured to provide at least part of the braking torque.

According to an example embodiment, the control unit may be configured to acquire planned route data indicative of a drive cycle of the electric vehicle including the braking cycle, and to determine the potential regenerative charging amount from the planned route data.

Effects and features of the second aspect of the invention are largely analogous to those described above in connection with the first aspect.

According to a third aspect of the invention, there is provided a vehicle comprising the system according to the second aspect.

According to a fourth aspect of the invention, there is provided a computer program comprising program code means for performing the steps the first aspect when the program is run on a computer.

According to a fifth aspect of the invention, there is provided a computer readable medium carrying a computer program comprising program code means for performing the steps of the first aspect when the program product is run on a computer.

According to a sixth aspect of the invention, there is provided control unit for energy management of an electric energy storage of an electric vehicle comprising at least one electric machine, the control unit being configured to perform the steps of the method according to the first aspect.

Effects and features of the third, fourth, fifth, and sixth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

With reference to the appended drawings, below follows a more detailed description of embodiments of the invention cited as examples.

In the drawings:
Fig. 1 is a vehicle in the form an electric truck according to example embodiments of the invention;
Fig. 2. conceptually illustrates a vehicle travelling along a route and implementing example embodiments of the invention;
Fig. 3 is a flow-chart of method steps according to example embodiments of the invention;
Fig. 4 is a flow-chart of method steps according to example embodiments of the invention;
Fig. 5 is a block diagram of a system according to example embodiments of the invention; and
Fig. 6 conceptually illustrates a driveline system according to example embodiments of the invention.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. The skilled person will recognize that many changes and modifications may be made within the scope of the appended claims.

Like reference character refer to like elements throughout the description.

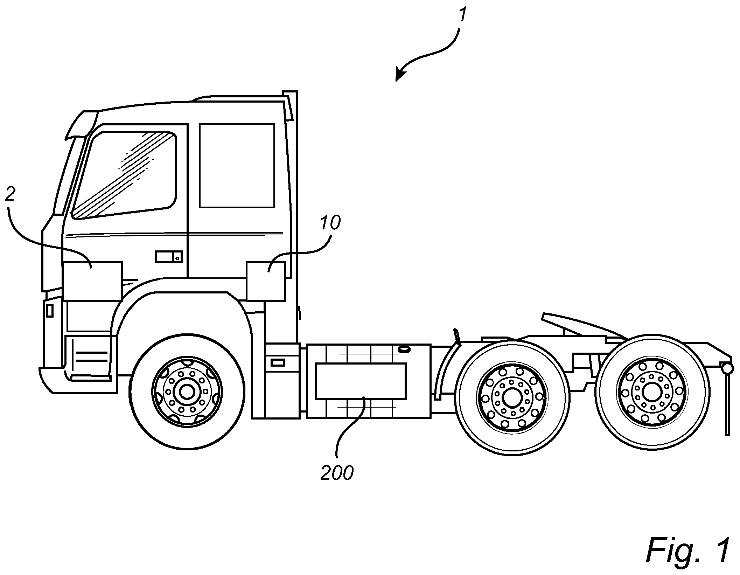

Fig. 1 illustrates a vehicle in the form of an electric truck 1 comprising a propulsion battery 2 generally comprising a plurality of series and parallel connected battery cells. The propulsion battery 2 is arranged to provide power to an electric driveline system 200 arranged for providing propulsion and braking torque for the electric truck 1. The electric truck 1 further comprises a battery managing system 10 which is configured to monitor battery cell characteristics such as SOC, battery voltage, and optionally temperature of the battery cells. The propulsion battery 2 may be a Li-ion battery comprises multiple cells electrically connected in series and in parallel.

Although the vehicle in fig. 1 is depicted as a heavy-duty truck, embodiments of the present disclosure may as well be implemented in other types of vehicles, such as in busses, light-weight trucks, passenger cars, construction equipment, industrial applications, and marine applications including e.g. vessels or ships.

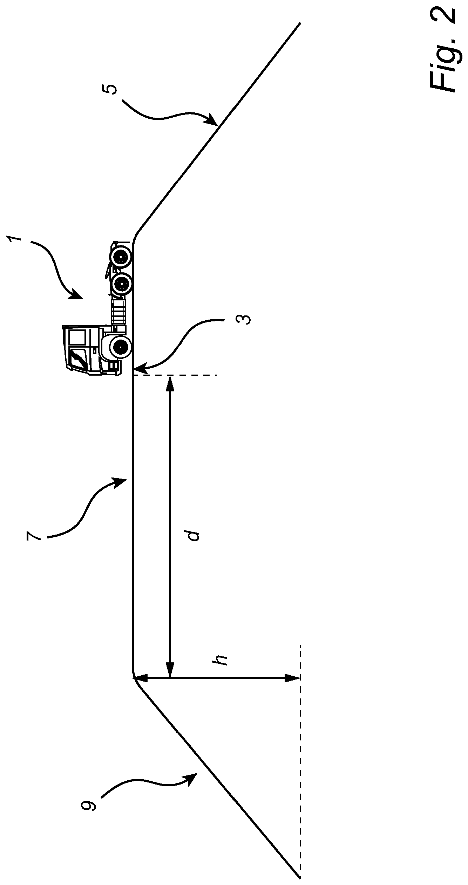

Fig. 2 conceptually illustrates a vehicle 1 travelling along a route 3. The route 3 is here shown including an uphill section 5, a relatively level or horizontal section 7 and a downhill section 9. The electric vehicle 1 needs to use a certain amount of energy in its battery 2 to travel to the section 7, and especially in this case preceded by an uphill section 5 leading to the elevated section 7. When the electric vehicle 1 reaches the downhill section 9, there is need for generating braking torque which means there is required to be room for regenerative charging of the battery 2. In order to avoid always making sure that there is room for regenerative charging, which may lead to insufficient state of charge especially for propulsion after traveling uphill through the uphill section 5, and to avoid using large brake resistors, the inventors propose an improved method and driveline system 200 which will now be described in more detail.

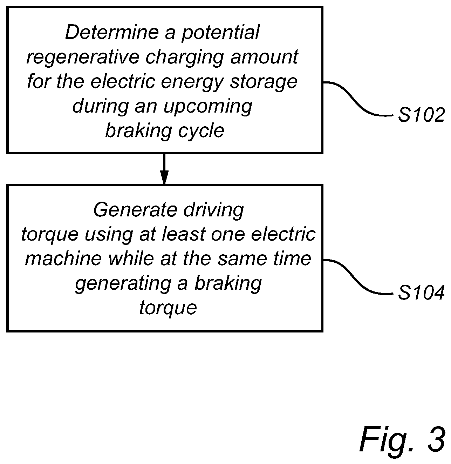

Now turning to the flow-chart in fig. 3. In step S102, determining a potential regenerative charging amount for the electric energy storage 2 during an upcoming braking cycle 9 for the electric vehicle 1.

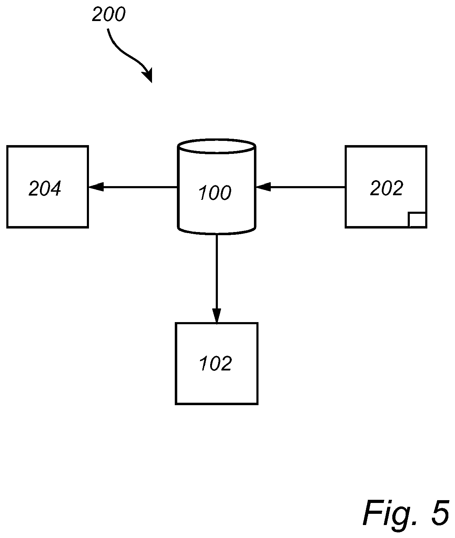

A block diagram of the driveline system 200 is shown in fig. 5, comprising at least one electric machine 102 configured to provide driving torque and a brake generating device 204 configured to provide braking torque to the driveline. A control unit 100 is configured to acquire data 202 indicating a potential regenerative charging amount for the electric energy storage 2 during an upcoming braking cycle 9 for the electric vehicle 1.

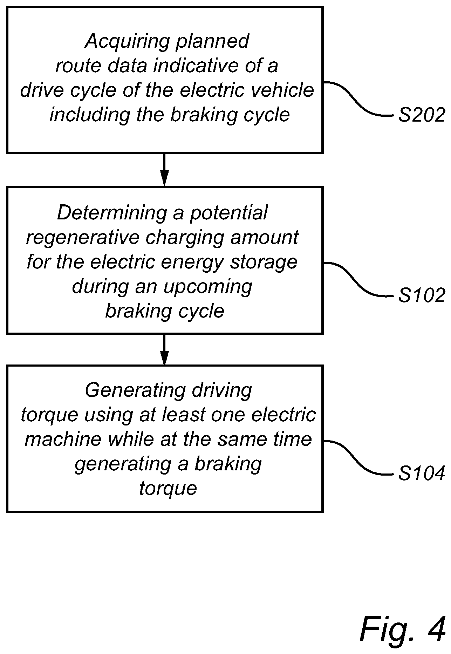

Determining a potential regenerative charging amount may be achieved in different ways. For example, as is indicated in the flow-chart in fig. 4, the step S102 may be preceded by step S202 comprising acquiring planned route data indicative of a drive cycle of the electric vehicle including the braking cycle 9. Step S102 may then include determining the potential regenerative charging amount using the planned route data. The planned route data may be comprised in the data 202 acquired by the control unit 100 which determines the potential regenerative charging amount from the planned route data 202.

The planned route data indicates the GPS coordinates of the upcoming drive cycle as determined from for example a predictive route feature able to predict an upcoming drive cycle based on for example the specific driver, time of day, day of the week, month, location. The planned route data may further be based on a requested route made to a navigation system of the vehicle. As a further example, the planned route data may be a predetermined commercial route or bus route known even prior to departure and that is loaded into the navigation system of the vehicle 1. Generally, the planned route comprises a set of GPS coordinates indicating the route.

Further, the vehicle 1, and other vehicles, may be equipped with a predictive system configured to collect and store route data while travelling. The route data may include road and vehicle characteristics such as road inclination, the type of road material such as gravel asphalt, concrete, etc, road altitude, uphill sections and downhill sections, braking cycles, and even potential regenerative charging amounts and the associated coordinates. The route data may be memorized while travelling in a local memory and is uploaded to a cloud-based system accessible to a fleet of vehicles each connected to the cloud based system. The route data may also be directly uploaded to the cloud-based system, i.e., to a remote server.

In some possible implementations, the potential regenerative charging amount is determined from historical potential regenerative charging amounts at the upcoming braking cycle 9. The control unit 100 may hereby evaluate data 202 indicating previous instances where regenerative charging events has occurred at the upcoming braking cycle 9, and based on the previous regenerative charging events, determine by means or calculations or estimations, the potential regenerative charging amount when reaching the braking cycle next time, i.e., during a present drive cycle. For example, the control unit 100 may use information concerning recent potential regenerative charging amounts at the upcoming brake cycle as input and adjust the input according to the present weight of the vehicle to determine the potential regenerative charging amount for the upcoming braking cycle 9.

Further, the potential regenerative charging amount can be determined from a topography of the planned route from which an upcoming braking cycle 9 can be predicted. The topography indicates the loss *h* in altitude. With prior knowledge of the vehicle's weight the potential energy lost due to the loss *h* in altitude can be calculated by the control unit 100. With further information of vehicle speed relating to kinetic energy, the total potential regenerative charging amount may be estimated by the control unit 100. Additional data related to air resistance and rolling resistance may be included in calculating the potential regenerative charging amount depending on the specific algorithm used.

Returning to the flow-charts in figs. 3 and 4, the method includes, before reaching the braking cycle 9, generating driving torque using at least one electric machine 102a while at the same time generating a braking torque using a brake generating device 102b, 204 to discharge the electric energy storage sufficient to receive the potential regenerative charging amount at the upcoming braking cycle 9 in step S104.

For step S104, the control unit 100 is configured to control the at least one electric machine 102 to generate driving torque and the brake generating device 204 to simultaneously as the driving torque is generated, generate braking torque, to discharge the electric energy storage sufficient to receive and store the potential regenerative charging amount at the upcoming braking cycle.

The generated driving torque corresponds to the sum of a demanded driving torque and the generated braking torque. This provides for the discharging of the electric energy storage 2 without affecting, or with minimal effect on the driving capability of vehicle as experienced by the driver.

The control unit 100 may evaluate the time or distance needed for discharging the electric energy storage sufficient before reaching the brake cycle 9. For example, the control unit 100 may acquire data indicating a present state of charge of the battery 2 and calculate at what pace the battery 2 must be discharged to reach a preparatory state of charge to receive the regenerative charging at the brake cycle 9. Using the present state of charge, the determined potential regenerative charging amount, and an estimate of the discharge rate, the control unit 100 may initiate the generation of driving torque at a time and with a magnitude so that the discharging of the electric energy storage 2 is completed immediately before reaching the braking cycle 9. For example, the control unit 100 may calculate that, with the present speed and topography of the road section 7 before the brake cycle 9, the generation of driving torque must be initiated at a distance d before reaching the brake cycle 9.

The electric vehicle may comprise a secondary braking system for generating the braking torque. For example, the secondary braking system may comprise a retarder adapted to generated braking torque as demanded by the control unit 100. The retarder may be configured to provide at least part of the braking torque and may be assisted by for example an electric machine.

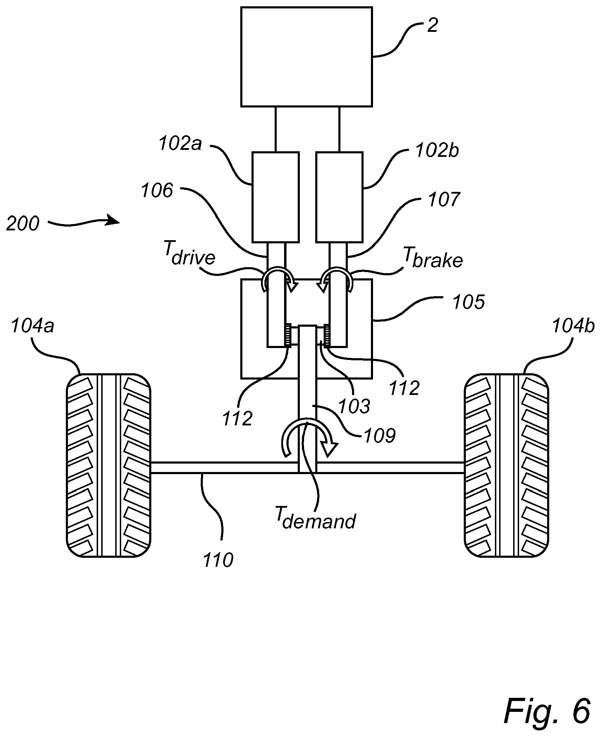

Turning to fig. 6, conceptually illustrating a driveline system 200 according to embodiments of the invention. The drive line system 200 comprises two electric machines 102a and 102b electrically connected to a propulsion battery 2 via converters, PWM (pulse-width modulation) modules, and other electric components needed for converting the energy in the battery 2 to a suitable voltage or current level for the electric machines 102a-b. Components for conversion of energy in the battery 2 to a suitable voltage or current level for the electric machines 102a-b are considered known in the art and are not denoted in the drawing or discussed in further detail herein.

Further, the electric machines 102a-b are mechanically connected to the wheels 104a-b via respective shafts 106 and 107 connected to a common input shaft 103 of a gear box 103 by means or a respective gear train 112 or any other suitable gear connection. The output shaft 109 from the gear box 105 provides power to the driving axle 110 of the wheels 104a-b.

In one embodiment, one of the electric machines, for example electric machine 102a is used for providing a driving torque T_{drive} and the other electric machine 102b is used for providing braking torque T_{brake}. In other words, the brake generating device is at least one of the electric machines that is not generating driving torque. The driving torque T_{drive} and the braking torque T_{brake} are of opposite direction so that they partly cancel at the input shaft 103 of the gear box 105. However, the generated driving torque T_{drive} corresponds to the sum of a demanded driving torque, T_{demand}, and the generated braking torque. In other words, T_{drive} = T_{demand} + T_{brake}. The output torque of the gear box is thus substantially equal to the torque presently demanded by the driver, T_{demand}.

In some embodiments, the electric vehicle comprises a secondary braking system which may contribute to the braking torque T_{brake}. However, in preferred embodiments the brake generating device is a further electric machine 102b configured to provide the braking torque.

There is further provided a computer program comprising program code means for performing the steps of the method according to any one of the herein discussed methods such as described with reference to the flow-charts in figs. 3 and 4 when the program is run on a computer such as including the control unit 100.

There is further provided a computer readable medium carrying a computer program comprising program code means for performing perform the steps of the method according to any one of the herein discussed methods such as described with reference to the flow-charts in figs. 3 and 4 when the program product is run on the computer.

The control unit 100 is configured to perform the steps of the method according to any one of the herein discussed methods such as described with reference to the flow-charts in figs. 3 and 4

The control unit 100 is either hardwired or wirelessly connected to the electric machines and the brake generating device, and to a storage or source of the data 202. For example, the data 200 may be acquired from a local memory of the vehicle or from a server i.e., the Cloud. A wireless communication system of the vehicle is configured to provide wireless communication with the cloud. Wireless communication systems include known protocols of telecommunications and Wi-Fi means.

A control unit may include a microprocessor, microcontroller, programmable digital signal processor or another programmable device. Thus, the control unit comprises electronic circuits and connections (not shown) as well as processing circuitry (not shown) such that the control unit can communicate with different parts of the truck such as the brakes, suspension, driveline, in particular an electric engine, an electric machine, a clutch, and a gearbox in order to at least partly operate the truck. The control unit may comprise modules in either hardware or software, or partially in hardware or software and communicate using known transmission buses such as CAN-bus and/or wireless communication capabilities. The processing circuitry may be a general purpose processor or a specific processor. The control unit comprises a non-transitory memory for storing computer program code and data upon. Thus, the skilled addressee realizes that the control unit may be implemented many different constructions.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures, and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A method for energy management of an electric energy storage (2) of an electric vehicle (1) comprising at least two electric machines (102a,b), the method comprising:
determining (S102) a potential regenerative charging amount for the electric energy storage during an upcoming braking cycle (9) for the electric vehicle;
before reaching the braking cycle (9), generating (S104) driving torque using at least one electric machine (102a) while at the same time generating a braking torque that at least partly counteracts the generated driving toque using at least one of the remaining electric machines (102b) that is not generating driving torque to discharge the electric energy storage sufficient to receive the potential regenerative charging amount at the upcoming braking cycle,
wherein the generated driving torque corresponds to the sum of a demanded driving torque and the generated braking torque.

2. The method according to claim 1, wherein the electric vehicle comprises a secondary braking system, wherein generating the braking torque comprises generating at least part of the braking torque using the secondary braking system.

3. The method according to any one of the preceding claims, comprising:
acquiring (S202) planned route data indicative of a drive cycle of the electric vehicle including the braking cycle, wherein the step of determining a potential regenerative charging amount comprises determining the potential regenerative charging amount using the planned route data.

4. The method according to claim 3, wherein generating the driving torque before reaching the braking cycle comprises:
initiating the generation of driving torque at a time and with a magnitude so that the discharging of the electric energy storage is completed immediately before reaching the braking cycle.

5. The method according to any one of claims 3 and 4, wherein the potential regenerative charging amount is determined from historical potential regenerative charging amounts at the upcoming braking cycle.

6. The method according to any one of claims 3 and 4, wherein the potential regenerative charging amount is determined from a topography of the planned route from which an upcoming braking cycle can be predicted.

7. A
control unit (100) configured to:
acquire data (202) indicating a potential regenerative charging amount for the electric energy storage during an upcoming braking cycle for the electric vehicle;
before reaching the braking cycle, control at least one electric machine (102) to generate driving torque and the further electric machine (102b) to simultaneously as the driving torque is generated, generate braking torque that at least partly counteracts the generated driving torque, to discharge the electric energy storage sufficient to receive the potential regenerative charging amount at the upcoming braking cycle, wherein the generated driving torque corresponds to the sum of a demanded driving torque and the generated braking torque.

8. An electric driveline system (200) for an electric vehicle comprising an electric energy storage system, comprising: at least one electric machine (102) configured to provide driving torque and a brake generating device (204) configured to provide braking torque to a driveline of the electric machine, and a control unit according to claim 7.

9. The energy management system according to claim 8, the control unit being configured to acquire planned route data indicative of a drive cycle of the electric vehicle including the braking cycle, and to determine the potential regenerative charging amount from the planned route data.

10. A vehicle (1) comprising a system according to any one of claims 8 or 9.

11. A computer program comprising program code means for performing the steps of any of claims 1-6 when the program is run on a control unit according to claim 7.

12. A computer readable medium carrying a computer program comprising program code means for performing the steps of any one of claims 1-6 when the program product is run on a control unit according to claim 7.

## Patentansprüche

1. Verfahren für das Energiemanagement eines elektrischen Energiespeichers (2) eines Elektrofahrzeugs (1), das mindestens zwei elektrische Maschinen (102a, b) umfasst, wobei das Verfahren Folgendes umfasst:
Bestimmen (S102) einer potenziellen regenerativen Lademenge für den elektrischen Energiespeicher während eines bevorstehenden Bremszyklus (9) des Elektrofahrzeugs;
vor dem Erreichen des Bremszyklus (9), Erzeugen (S104) eines Antriebsdrehmoments unter Verwendung mindestens einer elektrischen Maschine (102a), während gleichzeitig ein Bremsdrehmoment, das dem erzeugten Antriebsdrehmoment mindestens teilweise entgegenwirkt, unter Verwendung mindestens einer der verbleibenden elektrischen Maschinen (102b), die kein Antriebsdrehmoment erzeugt, erzeugt wird, um den elektrischen Energiespeicher ausreichend zu entladen, damit dieser die potenzielle regenerative Lademenge im bevorstehenden Bremszyklus aufnimmt,
wobei das erzeugte Antriebsdrehmoment der Summe aus einem angeforderten Antriebsdrehmoment und dem erzeugten Bremsdrehmoment entspricht.

2. Verfahren nach Anspruch 1, wobei das Elektrofahrzeug ein sekundäres Bremssystem umfasst, wobei das Erzeugen des Bremsdrehmoments das Erzeugen mindestens eines Teils des Bremsdrehmoments unter Verwendung des sekundären Bremssystems umfasst.

3. Verfahren nach einem der vorhergehenden Ansprüche, umfassend:
Erfassen (S202) von geplanten Routendaten, die einen Fahrzyklus des Elektrofahrzeugs einschließlich des Bremszyklus angeben, wobei der Schritt des Bestimmens einer potenziellen regenerativen Lademenge das Bestimmen der potenziellen regenerativen Lademenge unter Verwendung der geplanten Routendaten umfasst.

4. Verfahren nach Anspruch 3, wobei das Erzeugen des Antriebsdrehmoments vor dem Erreichen des Bremszyklus Folgendes umfasst:
Einleiten der Erzeugung des Antriebsdrehmoments zu einem Zeitpunkt und mit einem Ausmaß, so dass unmittelbar vor dem Erreichen des Bremszyklus das Entladen des elektrischen Energiespeichers abgeschlossen ist.

5. Verfahren nach einem der Ansprüche 3 und 4, wobei die potenzielle regenerative Lademenge aus historischen potenziellen regenerativer Lademengen beim bevorstehenden Bremszyklus bestimmt wird.

6. Verfahren nach einem der Ansprüche 3 und 4, wobei die potenzielle regenerative Lademenge aus einer Topographie der geplanten Route bestimmt wird, anhand der ein bevorstehender Bremszyklus vorhergesagt werden kann.

7. Steuereinheit (100), die für Folgendes konfiguriert ist:
Erfassen von Daten (202), die eine potenzielle regenerative Lademenge für den elektrischen Energiespeicher während eines bevorstehenden Bremszyklus des Elektrofahrzeugs angeben;
vor dem Erreichen des Bremszyklus, Steuern mindestens einer elektrischen Maschine (102), um ein Antriebsdrehmoment zu erzeugen, und der weiteren elektrischen Maschine (102b), um gleichzeitig, während das Antriebsdrehmoment erzeugt wird, ein Bremsdrehmoment zu erzeugen, das dem erzeugten Antriebsdrehmoment mindestens teilweise entgegenwirkt, um den elektrischen Energiespeicher ausreichend zu entladen, damit dieser die potenzielle regenerative Lademenge beim bevorstehenden Bremszyklus aufnimmt, wobei das erzeugte Antriebsdrehmoment der Summe aus einem angeforderten Antriebsdrehmoment und dem erzeugten Bremsdrehmoment entspricht.

8. Elektrisches Antriebsstrangsystem (200) für ein Elektrofahrzeug, das ein elektrisches Energiespeichersystem umfasst, umfassend: mindestens eine elektrische Maschine (102), die dazu konfiguriert ist, ein Antriebsdrehmoment bereitzustellen, und eine Bremserzeugungsvorrichtung (204), die dazu konfiguriert ist, ein Bremsdrehmoment an einen Antriebsstrang der elektrischen Maschine bereitzustellen, und eine Steuereinheit nach Anspruch 7.

9. Energiemanagementsystem nach Anspruch 8, wobei die Steuereinheit dazu konfiguriert ist, geplante Routendaten zu erfassen, die einen Fahrzyklus des Elektrofahrzeugs einschließlich des Bremszyklus angeben, und aus den geplanten Routendaten die potenzielle regenerative Lademenge zu bestimmen.

10. Fahrzeug (1), das ein System nach einem der Ansprüche 8 oder 9 umfasst.

11. Computerprogramm, das Programmcodemittel zum Durchführen der Schritte nach einem der Ansprüche 1-6 umfasst, wenn das Programm auf einer Steuereinheit nach Anspruch 7 ausgeführt wird.

12. Computerlesbares Medium, das ein Computerprogramm enthält, das Programmcodemittel zum Durchführen der Schritte nach einem der Ansprüche 1-6 umfasst, wenn das Programmprodukt auf einer Steuereinheit nach Anspruch 7 ausgeführt wird.

## Revendications

1. Procédé de gestion d'énergie d'un accumulateur d'énergie électrique (2) d'un véhicule électrique (1) comprenant au moins deux machines électriques (102a, b), le procédé comprenant :
la détermination (S102) d'une quantité potentielle de charge régénérative pour le stockage d'énergie électrique pendant un cycle de freinage (9) à venir pour le véhicule électrique ;
avant d'atteindre le cycle de freinage (9), la génération (S104) d'un couple moteur au moyen d'au moins une machine électrique (102a) tout en générant un couple de freinage qui contrebalance au moins partiellement le couple moteur généré au moyen d'au moins une des machines électriques restantes (102b) qui ne génère pas de couple moteur pour décharger le stockage d'énergie électrique suffisant pour recevoir la charge régénérative potentielle au cycle de freinage suivant, le couple moteur généré correspondant à la somme d'un couple moteur demandé et du couple de freinage généré.

2. Procédé selon la revendication 1, dans lequel le véhicule électrique comprend un système de freinage secondaire, la génération du couple de freinage comprenant la génération d'au moins une partie du couple de freinage en utilisant le système de freinage secondaire.

3. Procédé selon l'une quelconque des revendications précédentes, comprenant :
l'acquisition (S202) de données d'itinéraire planifié indicatives d'un cycle de conduite du véhicule électrique comprenant le cycle de freinage, l'étape de détermination d'une quantité de charge régénérative potentielle comprenant la détermination de la quantité de charge régénérative potentielle à l'aide des données d'itinéraire planifié.

4. Procédé selon la revendication 3, dans lequel la génération du couple moteur avant d'atteindre le cycle de freinage comprend :
le déclenchement de la génération d'un couple moteur à un moment et avec une amplitude tels que la décharge du stockage d'énergie électrique se termine immédiatement avant d'atteindre le cycle de freinage.

5. Procédé selon l'une quelconque des revendications 3 et 4, dans lequel la quantité de charge régénérative potentielle est déterminée à partir des quantités de charge régénérative potentielles historiques au cycle de freinage suivant.

6. Procédé selon l'une quelconque des revendications 3 et 4, dans lequel la quantité potentielle de charge régénérative est déterminée à partir d'une topographie de l'itinéraire planifié à partir de laquelle un cycle de freinage à venir peut être prédit.

7. Unité de commande (100) configurée pour :
acquérir des données (202) indiquant une quantité potentielle de charge régénérative pour le stockage d'énergie électrique au cours d'un cycle de freinage à venir pour le véhicule électrique ;
avant d'atteindre le cycle de freinage, commander au moins une machine électrique (102) pour générer un couple moteur et l'autre machine électrique (102b) pour générer simultanément le couple moteur, un couple de freinage qui contrebalance au moins partiellement le couple moteur généré, afin de décharger le stockage d'énergie électrique suffisant pour recevoir la quantité de charge régénérative potentielle au cycle de freinage suivant, le couple moteur généré correspondant à la somme d'un couple moteur demandé et du couple de freinage généré.

8. Système de transmission électrique (200) pour un véhicule électrique comprenant un système de stockage d'énergie électrique, comprenant : au moins une machine électrique (102) configurée pour fournir un couple moteur et un dispositif de génération de freinage (204) configuré pour fournir un couple de freinage à une transmission de la machine électrique, et une unité de commande selon la revendication 7.

9. Système de gestion d'énergie selon la revendication 8, l'unité de commande étant configurée pour acquérir des données d'itinéraire planifié indicatives d'un cycle de conduite du véhicule électrique comprenant le cycle de freinage, et pour déterminer la quantité de charge régénérative potentielle à partir des données d'itinéraire planifié.

10. Véhicule (1) comprenant un système selon l'une quelconque des revendications 8 ou 9.

11. Programme informatique comprenant un moyen de code de programme pour exécuter les étapes de l'une quelconque des revendications 1 à 6 lorsque le programme est exécuté sur une unité de commande selon la revendication 7.

12. Support lisible par ordinateur comportant un programme informatique comprenant un moyen de code de programme pour réaliser les étapes de l'une quelconque des revendications 1 à 6 lorsque le produit de programme est exécuté sur une unité de commande selon la revendication 7.
